# EUROPÄISCHE PATENTSCHRIFT

(11) **EP 3 092 726 B1**
(45) Veröffentlichungstag und Bekanntmachung des Hinweises auf die Patenterteilung: **04.04.2018**
(21) Anmeldenummer: 14727376.7
(22) Anmeldetag: 13.05.2014
(51) Int. Cl.: H04B 7/26, A47G 19/12, A47G 19/22

(54) **VERFAHREN UNS SYSTEM ZUR DIREKTKOMMUNIKATION VON MOBILEN ENDGERÄTEN**
METHOD AND SYSTEM FOR DIRECT COMMUNICATION BETWEEN MOBILE TERMINALS
PROCÉDÉ ET SYSTÈME DE COMMUNICATION DIRECTE D'APPAREILS TERMINAUX MOBILES

(30) Priorität: 09.01.2014 AT 122014
(43) Veröffentlichungstag der Anmeldung: 16.11.2016
(73) Patentinhaber: Armoni, Hanan, 7194000 D.n. Modiin (IL); Shlapobersky, Saar, 4593000 Ramot-hashavim (IL)
(72) Erfinder: Armoni, Hanan, 7194000 D.n. Modiin (IL); Shlapobersky, Saar, 4593000 Ramot-hashavim (IL)
(74) Vertreter: Puchberger & Partner Patentanwälte
(86) Internationale Anmeldenummer: PCT/IB2014/061399
(87) Internationale Veröffentlichungsnummer: WO 2015/104592

(56) Entgegenhaltungen:
- EP-A1- 0 532 103
- EP-A2- 0 713 345
- EP-A2- 0 964 532
- US-A- 5 995 500
- US-A- 6 047 178

## Beschreibung

Die Erfindung betrifft ein Verfahren und ein System zur Direktkommunikation von mobilen Endgeräten.

Beim weltweit verbreiteten GSM-Standard zur mobilen Sprach- und Datenübertragung zwischen mobilen Endgeräten werden die digitalen Daten mit einer Mischung aus Frequenzmultiplexing und Zeitmultiplexing (Time Division Multiple Access, TDMA) übertragen, wobei Sende- und Empfangsband in unterschiedlichen Frequenzbändern vorgesehen sind. Das GSM-Frequenzband wird in mehrere Kanäle unterteilt, die einen Abstand von 200 kHz haben. Bei GSM 900 sind im Bereich von 890-915 MHz 124 Kanäle für die Aufwärtsrichtung (Uplink) zur Basisstation und im Bereich von 935-960 MHz 124 Kanäle für die Abwärtsrichtung (Downlink) vorgesehen.

Die TDMA-Rahmendauer beträgt ca. 4,615 ms und entspricht der Dauer von exakt 1250 Symbolen. Jeder der acht Zeitschlitze pro Rahmen dauert somit ca. 0,577 ms, entsprechend der Dauer von 156,25 Symbolen. In diesen Zeitschlitzen können Bursts verschiedener Typen gesendet und empfangen werden. Die Dauer eines normalen Bursts beträgt ca. 0,546 ms, in denen 148 Symbole übertragen werden.

Nach dem Senden eines Empfangsbursts schaltet das Mobiltelefon auf die um 45 MHz versetzte Sendefrequenz, und sendet dort den Burst des Rückkanals an die Basisstation. Da Downlink und Uplink um drei Zeitschlitze versetzt auftreten, genügt eine Antenne für beide Richtungen.

Ein GSM-Telefoniesystem benötigt jedoch immer ein aufrechtes Netz, das durch eine oder mehrere Basisstationen geliefert wird. Eine Kommunikation der Endgeräte untereinander ist mit diesem System nicht vorgesehen.

Gattungsgemäße Verfahren zur Direktkommunikation zwischen Endgeräten sind beispielsweise aus den Druckschriften US 5,995,500 A und EP 0 713 345 A2 bekannt.

Die Aufgabe der Erfindung besteht darin, ein Übermittlungsverfahren zu schaffen, mit dem zwei oder mehr mobile Endgeräte, die nach dem GSM-Standard aufgebaut sind, auch eine direkte Kommunikation untereinander durchführen können. Dies soll ohne Änderung der Hardware durch rein softwaremäßige Änderungen erfolgen.

Der Betrieb im Direktmodus soll die Kommunikation auch dann ermöglichen, wenn das Netz ausfällt z.B. in Katastrophenfällen oder wenn aus anderen Gründen kein Netz vorhanden ist, beispielsweise in ländlichen Gebieten oder im Fall gewerbsmäßiger Nutzung, beispielsweise durch Schienenarbeiter. Da der Direktmodus nicht netzabhängig ist, entstehen bei der Datenübertragung keine netzabhängigen Kosten. Ein Anwendungsbeispiel können z.B. große Baustellen sein, wo viele Mitarbeiter miteinander kommunizieren, was im Netzbetrieb erhebliche Kosten verursachen kann.

Diese Aufgabe wird erfindungsgemäß durch ein Verfahren gemäß Anspruch 1 gelöst.

Das erfindungsgemäße Verfahren hat den Vorteil, dass die herkömmliche GSM-Übertragung nicht beeinflusst wird: Die Endgeräte können nach wie vor im GSM-System senden und empfangen, und zwar in den nicht verwendeten Zeitschlitzen des Multirahmens. Es werden lediglich einzelne Zeitschlitze der GSM-Übertragungsrahmen zur Simplex-Kommunikation mit anderen Endgeräten verwendet. Die teilnehmenden Endgeräte verwenden den GSM-Übertragungsrahmen und bauen eine eigenen, synchronisierten Multirahmen mit eigener Synchronisation und Frequenzkorrektur auf, innerhalb dessen sie im Simplex-Verfahren miteinander kommunizieren können. Erfindungsgemäß kann durch einen internen Filter der Endgeräte ein bestimmter Frequenzbereich für die Direktkommunikation ausgewählt werden, der sich mit dem GSM-Uplink oder GSM-Downlink Frequenzband überlappt oder, vorzugsweise, dieses umfasst. Es kann aber auch ein separates, lizenzfreies Frequenzband für die Direktkommunikation verwendet werden.

Erfindungsgemäß ist vorgesehen, dass in zwei TDMA-Rahmen, vorzugsweise an den Positionen 11 und 25 des Multirahmens, Frequenzkorrektur-Bursts FCCH sowie in zwei weiteren TDMA-Rahmen, vorzugsweise an den Positionen 12 und 25 des Multirahmens, Synchronisations-Bursts SCH und in den verbleibenden TDMA-Rahmen des Multirahmens Daten-Bursts TCH gesendet werden.

Erfindungsgemäß ist vorgesehen, dass in jedem Zeitschlitz 158,25 Bits übertragen werden, wobei ein Daten-Burst TCH eine Trainingssequenz von 26 Bits und zwei Datenpakete von 57 umfasst, ein Synchronisations-Burst SCH eine Trainingssequenz von 64 Bits und zwei Datenpakete von je 39 Bits umfasst, und der Frequenzkorrektur-Burst FCCH 142 Bits mit dem Symbol "0" umfasst.

Erfindungsgemäß kann vorgesehen sein, dass ein mobiles Endgerät eine Repeater-Funktion übernimmt, wobei es ein in einem ersten Zeitschlitz, vorzugsweise in Position TS0, eines vereinbarten TDMA-Rahmens empfangenes Datenpaket in einem zweiten Zeitschlitz, vorzugsweise an Position TS3, desselben TDMA-Rahmens weitersendet.

Erfindungsgemäß kann vorgesehen sein, dass das Endgerät abhängig davon, ob es der erste, zweite, oder dritte Repeater ist, das empfangene Datenpaket in unterschiedlichen Zeitschlitzen innerhalb des vereinbarten TDMA-Rahmens, vorzugsweise an Position TS3, TS4 und TS5, weitersendet. Dadurch wird eine Kollision der Datenpakete in Überlappungsbereichen zwischen dem ursprünglich gesendeten Signal und dem vom Repeater gesendeten Signal verhindert.

Erfindungsgemäß ist das Verfahren zur Direktkommunikation durch reine Softwaremethoden im mobilen Endgerät als stand-alone Verfahren implementiert, also ohne Netzabdeckung ausführbar. Es kann gleichzeitig mit einer GSM-Übertragung ausführbar sein.

Es können softwaremäßig neue Level 1, Level 2 und Level 3 Protokolle vorgesehen sein, während der Signalprozessor und alle Hardware-Funktionen mit der GSM-Funktionalität geteilt werden.

Die Erfindung betrifft weiters ein mobiles Endgerät, insbesondere Mobiltelefon, welches ein erfindungsgemäßes Verfahren ausführt, sowie ein System aus einer Vielzahl von mobilen Endgeräten, auf denen ein erfindungsgemäßes Verfahren ausgeführt wird.

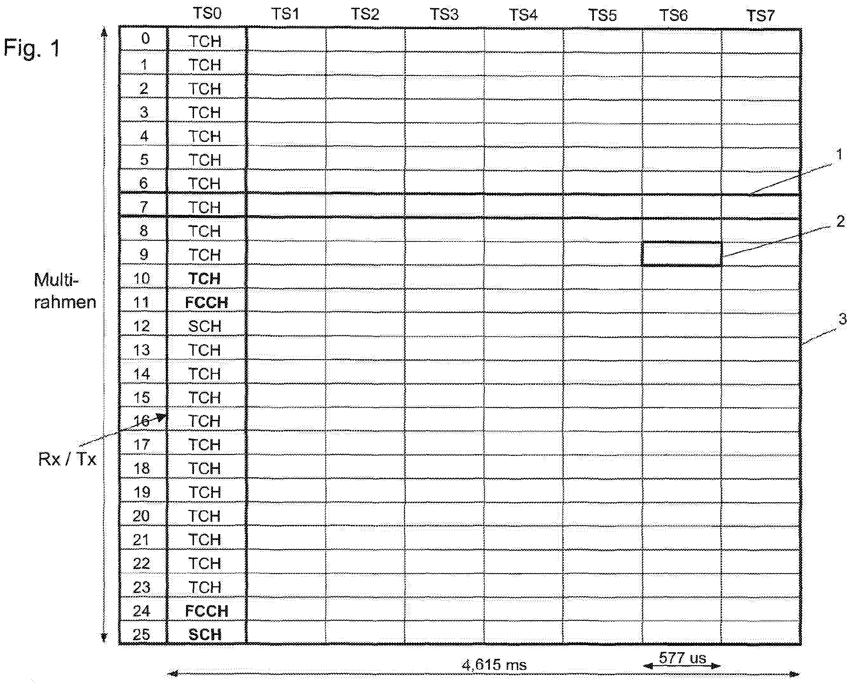

Fig. 1 zeigt ein Ausführungsbeispiel eines entsprechenden Multirahmens 3, der 26 einzelne TDMA-Rahmen 1 umfasst. Jeder TDMA-Rahmen 1 umfasst acht Zeitschlitze 2 mit der Bezeichnung TS0 bis TS7. Bei Verwendung der Direktkommunikation werden in den Zeitschlitzen Bursts mit der Bezeichnung TCH, FCCH und SCH übertragen. Die Abkürzung TCH bezeichnet den Traffic Channel Burst, der die zu übertragenden Sprachdaten beinhaltet. FCCH bedeutet Frequency Correction Channel, und SCH ist der Synchronization Channel. Die Rahmen 11 und 24 innerhalb des Multiframes dienen der Übertragung der Frequenzkorrektur-Bursts FCCH, und die Rahmen 12 sowie 25 dienen der Übertragung der Synchronisations-Bursts SCH. Sowohl im Sendemodus, als auch im Empfangmodus wird innerhalb des Multirahmens in jedem TDMA-Rahmen lediglich der erste Zeitschlitz TS0 zum Senden oder Empfangen belegt, während die anderen Zeitschlitze TS1 bis TS7 frei bleiben. Die Übertragung erfolgt im Simplex-Modus, sodass ein mobiles Endgerät stets nur entweder senden oder empfangen kann.

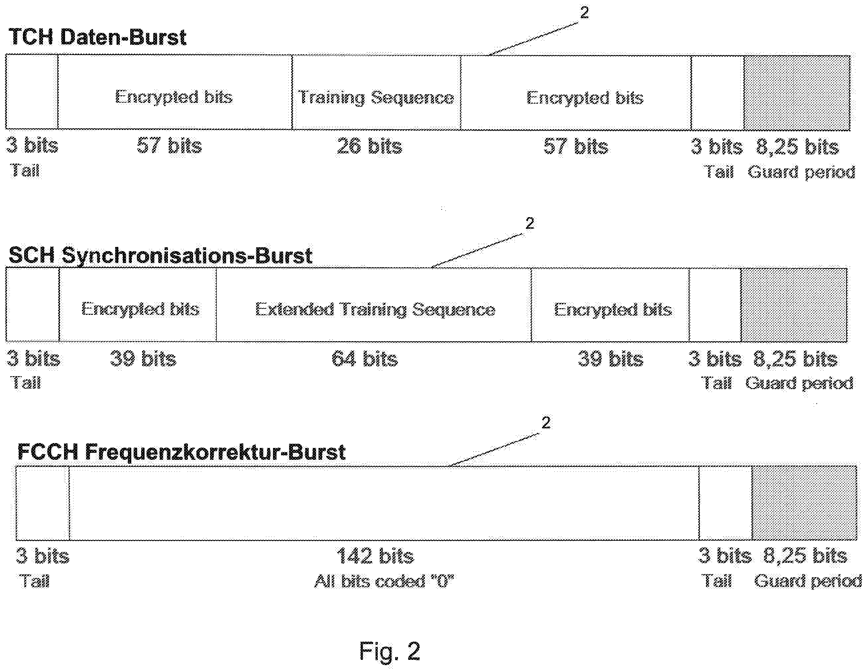

Fig. 2 zeigt den Aufbau eines TCH Daten-Bursts, eines SCH Synchronisations-Bursts und eines FCCH Frequenzkorrektur-Bursts. In einem TCH Daten-Burst werden 114 Datenbits übertragen, in einem SCH Synchronisations-Burst 78 Datenbits, und in einem Frequenzkorrektur-Burst keine Datenbits.

Beim Betrieb von Endgeräten im Direktmodus ist die Reichweite durch die relativ geringe Sendeleistung und durch Geländeeinflüsse begrenzt. Die vorliegende Erfindung sieht daher auch die Möglichkeit vor, dass die mobilen Endgeräte gemäß Erfindung eine Repeaterfunktion übernehmen und wie eine Relaisstation die Datenübermittlung zwischen zwei oder mehreren anderen Endgeräten vermitteln.

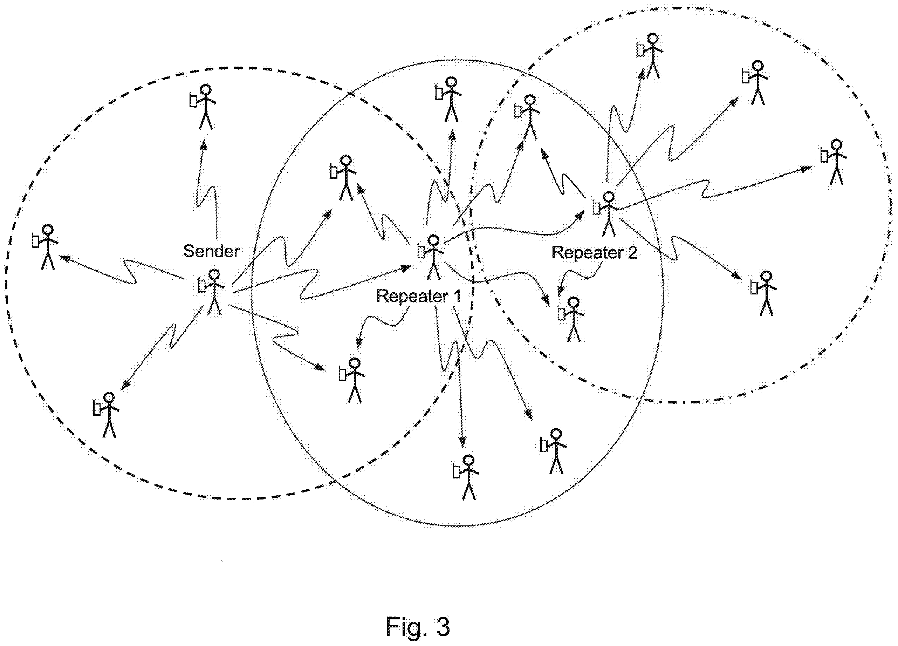

Fig. 3 zeigt die grundlegende Situation bei Ausführung der Repeaterfunktion. Ein Sender übermittelt in Direktkommunikation Daten an einen ersten Repeater. Dieser befindet sich noch innerhalb der Reichweite des Senders, empfängt die Daten und sendet sie innerhalb seiner Reichweite weiter. Ein zweiter Repeater, der sich innerhalb der Reichweite des ersten Repeaters befindet, empfängt die Daten und sendet sie in seinem Sendebereich weiter. Dadurch wird eine Direktkommunikation zwischen Endgeräten ermöglicht, die sich nicht im selben Sendebereich befinden.

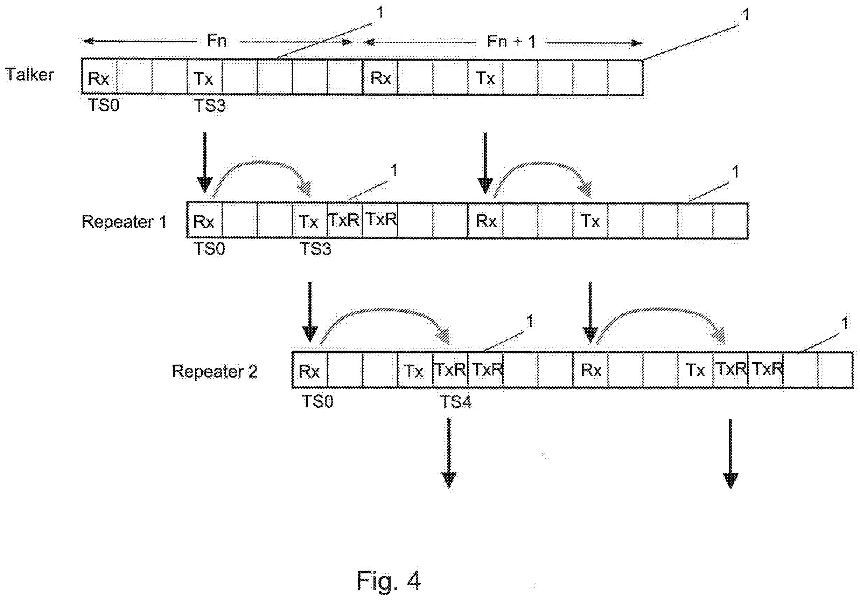

Fig. 4 zeigt das Übermittlungsprotokoll in der Repeaterfunktion. Jeder Rahmen arbeitet nicht nur im Zeitschlitz 1, sondern es kommen die übrigen Zeitschlitze in Verwendung. Der erste Zeitschlitz TS0 wird verwendet, um den übertragenen Burst zu empfangen. Über den Zeitschlitz TS3 wird das Signal vom Talker und vom ersten Repeater weitergegeben. Der zweite Repeater empfängt im Zeitschlitz 1, der mit Rx bezeichnet ist und überträgt das Signal über den Zeitschlitz TS4. Ein weiterer Repeater würde die Daten ebenfalls im Zeitschlitz TS0 empfangen, jedoch im Zeitschlitz TS5 weitersenden.

Auch in der Repeater-Funktion erfolgt die Übertragung im Simplex-Modus, sodass jedes mobiles Endgerät nur entweder senden oder empfangen kann.

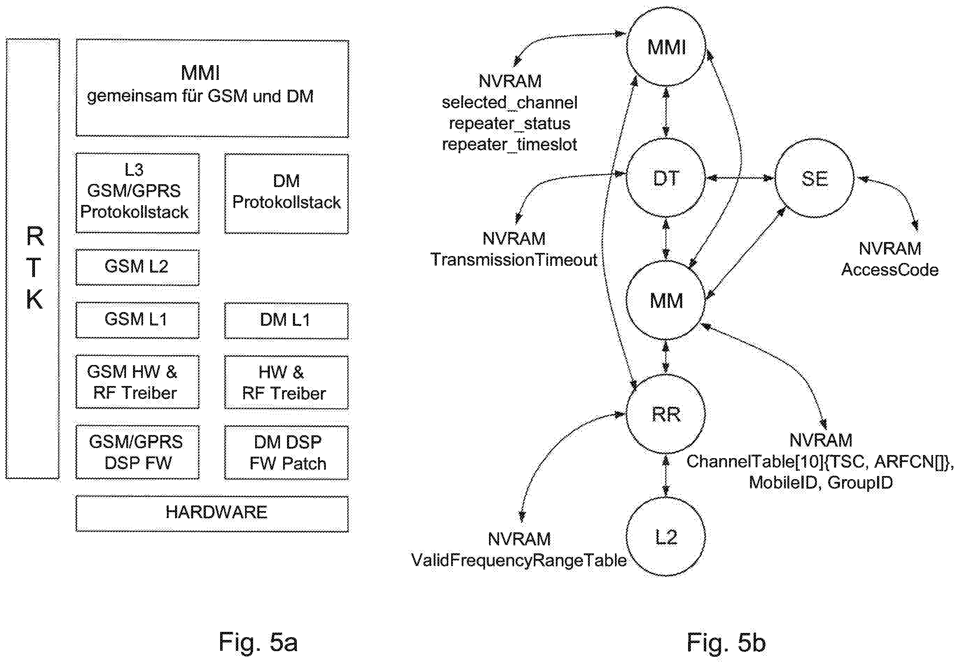

Figs. 5a und 5b zeigt den Aufbau des Software Stacks für das gegenständliche Verfahren in einem Schichfienmodell im Vergleich zum herkömmlichen GSM-Software Stack. Der DM Protokoll Stack in L2 oder L3 umfasst ein Direct Transmission (DT) Modul zur Anrufsteuerung, ein Mobility Management (MM) Modul zur Unterstützung von Mobile ID, User ID, oder Group ID, ein Security (SE) Modul zur Unterstützung von User Mode und Supervisor Mode sowie ein Radio-Resource Management (RR) Modul.

Das hardwarenahe DM L1 Protokoll (nicht dargestellt) ist als Erweiterung des GSM L1 Protokolls ausgeführt und kann in der GSM L1A oder L1S Schicht implementiert werden und sorgt für die korrekte Zuordnung der Zeitschlitze, TDMA-Rahmen und den korrekten Aufbau des verwendeten Multirahmens.

Die Erfindung beschränkt sich nicht auf die vorliegenden Ausführungsbeispiele, sondern umfasst sämtliche Verfahren und Systeme im Rahmen der nachfolgenden Patentansprüche.

## Patentansprüche

1. Verfahren zur Direktkommunikation zwischen mobilen Endgeräten unter Benutzung von GSM-Trägerfrequenzen, wobei jede Trägerfrequenz TDMA-Rahmen (1) mit einer TDMA-Rahmendauer von 4,615ms übermittelt und jeder TDMA-Rahmen 8 Zeitschlitze (2) mit einer Dauer von 577 Mikrosekunden umfasst, wobei in jedem Zeitschlitz (2) 158,25 Bits übertragen werden, **dadurch gekennzeichnet, dass**
i) durch Zusammenfassung von mehreren TDMA-Rahmen ein Multirahmen (3) vereinbart wird, wobei die beteiligten Endgeräte im Simplex-Modus betrieben werden und innerhalb eines vereinbarten TDMA-Rahmens (1) des Multirahmens stets in voneinander getrennten Zeitschlitzen senden und empfangen,
ii) in zwei TDMA-Rahmen (1) Frequenzkorrektur-Bursts FCCH sowie in zwei weiteren TDMA-Rahmen Synchronisations-Bursts SCH und in den verbleibenden TDMA-Rahmen des Multirahmens Daten-Bursts TCH gesendet werden,
iii) wobei ein Daten-Burst TCH eine Trainingssequenz von 26 Bits und zwei Datenpakete von 57 umfasst, ein Synchronisations-Burst SCH eine Trainingssequenz von 64 Bits und zwei Datenpakete von je 39 Bits umfasst, und der Frequenzkorrektur-Burst FCCH 142 Bits mit dem Symbol "0" umfasst.

2. Verfahren nach Anspruch 1, **dadurch gekennzeichnet, dass** ein mobiles Endgerät eine Repeater-Funktion übernimmt, wobei es ein in einem ersten Zeitschlitz, vorzugsweise in Position TS0, eines vereinbarten TDMA-Rahmens empfangenes Datenpaket in einem zweiten Zeitschlitz, vorzugsweise an Position TS3, desselben TDMA-Rahmens weitersendet.

3. Verfahren nach Anspruch 2, **dadurch gekennzeichnet, dass** das Endgerät abhängig davon, ob es der erste, zweite, oder dritte Repeater ist, das empfangene Datenpaket in unterschiedlichen Zeitschlitzen innerhalb des vereinbarten TDMA-Rahmens, vorzugsweise an Position TS3, TS4 und TS5, weitersendet.

4. Mobiles Endgerät, insbesondere Mobiltelefon, mit Mitteln zur Durchführung des Verfahrens nach einem der Ansprüche 1 bis 3.

5. Mobiles Endgerät nach Anspruch 4, **dadurch gekennzeichnet, dass** die GSM Layer 1, 2 und 3 Protokolle zur Ausführung eines Verfahrens nach einem der Ansprüche 1 bis 3 angepasst sind.

6. System aus einer Vielzahl von mobilen Endgeräten nach einem der Ansprüche 4 oder 5, **dadurch gekennzeichnet, dass** ein Verfahren nach einem der Ansprüche 1 bis 3 ausgeführt wird.

## Claims

1. A method for direct communication between mobile terminals using GSM carrier frequencies, wherein each carrier frequency transmits TDMA frames (1) with a TDMA frame duration of 4.615 ms and each TDMA frame comprises 8 time slots (2) with a duration of 577 microseconds, wherein 158.25 bits are transmitted in each time slot (2), **characterised in that**
i) a multi-frame (3) is agreed by combining a number of TDMA frames, wherein the participating terminals are operated in the Simplex mode and always transmit and receive within an agreed TDMA frame (1) of the multi-frame in time slots separated from one another,
ii) frequency correction bursts FCCH are transmitted in two TDMA frames (1) and synchronisation bursts SCH are transmitted in two further TDMA frames and data bursts TCH are transmitted in the remaining TDMA frames of the multi-frame,
iii) wherein a data burst TCH comprises a training sequence of 26 bits and two data packets of 57, a synchronisation burst SCH comprises a training sequence of 64 bits and two data packets of 39 bits each, and the frequency correction burst FCCH comprises 142 bits with the symbol "0".

2. The method according to claim 1, **characterised in that** a mobile terminal assumes a repeater function, wherein it forwards a data packet received in a first time slot, preferably in position TS0 of an agreed TDMA frame, in a second time slot, preferably at position TS3 of the same TDMA frame.

3. The method according to claim 2, **characterised in that** the terminal, depending on whether it is the first, second or third repeater, forwards the received data packet in different time slots within the agreed TDMA frame, preferably at position TS3, TS4 and TS5.

4. A mobile terminal, in particular a mobile telephone, with means for executing the method according to one of claims 1 to 3.

5. The mobile terminal according to claim 4, **characterised in that** the GSM layer 1, 2 and 3 protocols are adapted to execute a method according to one of claims 1 to 3.

6. A system consisting of a plurality of mobile terminals according to one of claims 4 or 5, **characterised in that** a method is executed according to one of claims 1 to 3.

## Revendications

1. Procédé pour la communication directe entre appareils terminaux mobiles en faisant appel à des fréquences porteuses GSM, dans lequel chaque fréquence porteuse communique des trames AMRT (1) avec une durée de trame AMRT de 4,615 ms et chaque trame AMRT comprend 8 créneaux temporels (2) d'une durée de 577 microsecondes, dans lequel 158,25 bits sont transmis dans chaque créneau temporel (2), **caractérisé en ce que**
i) par regroupement de plusieurs trames AMRT, on convient d'une trame multiple (3), dans lequel les appareils terminaux participants sont exploités en mode simplex et émettent et réceptionnent toujours dans des créneaux temporels distincts les uns des autres au sein d'une trame AMRT (1) convenue de la trame multiple,
ii) des salves de correction de fréquence FCCH sont envoyées dans deux trames AMRT (1) ainsi que des salves de synchronisation SCH sont envoyées dans deux autres trames AMRT et des salves de données TCH sont envoyées dans les trames AMRT résiduelles de la trame multiple,
iii) dans lequel une salve de données TCH comprend une séquence d'apprentissage de 26 bits et deux paquets de données de 57, une salve de synchronisation SCH comprend une séquence d'apprentissage de 64 bits et deux paquets de données de respectivement 39 bits, et la salve de correction de fréquence FCCH comprend 142 bits avec le symbole « 0 ».

2. Procédé selon la revendication 1, **caractérisé en ce qu'**un appareil terminal mobile adopte une fonction de répéteur, dans lequel il retransmet un paquet de données réceptionné dans un premier créneau temporel, de préférence en position TS0, d'une trame AMRT convenue, dans un deuxième créneau temporel, de préférence en position TS3, de cette même trame AMRT.

3. Procédé selon la revendication 2, **caractérisé en ce que** l'appareil terminal, indépendamment du fait qu'il est le premier, le deuxième ou le troisième répéteur, retransmet le paquet de données réceptionné dans différents créneaux temporels au sein de la trame AMRT convenue, de préférence en position TS3, TS4 et TS5.

4. Appareil terminal mobile, en particulier téléphone mobile, avec des moyens pour la mise en oeuvre du procédé selon l'une des revendications 1 à 3.

5. Appareil terminal mobile selon la revendication 4, **caractérisé en ce que** les protocoles de la couche GSM 1, 2 et 3 sont adaptés pour la mise en oeuvre d'un procédé selon l'une des revendications 1 à 3.

6. Système à base d'une pluralité d'appareils terminaux mobiles selon l'une des revendications 4 ou 5, **caractérisé en ce qu'**un procédé selon l'une des revendications 1 à 3 est mis en oeuvre.
